# EUROPEAN PATENT APPLICATION

(11) **EP 2 949 395 A1**
(43) Date of publication of application: **02.12.2015**
(21) Application number: 15168870.2
(22) Date of filing: 22.05.2015
(51) Int. Cl.: B01L 7/00, C12Q 1/68

(54) **CONTROL METHOD FOR NUCLEIC ACID AMPLIFICATION REACTION APPARATUS, AND NUCLEIC ACID AMPLIFICATION REACTION APPARATUS**

(30) Priority: 26.05.2014 JP 2014107844
(71) Applicant: Seiko Epson Corporation, Shinjuku-ku Tokyo 163-0811 (JP)
(72) Inventor: Togashi, Ken, Nagano, 392-8502 (JP); Takagi, Fumio, Nagano, 392-8502 (JP); Murayama, Toshiro, Nagano, 392-8502 (JP)
(74) Representative: Hoffmann Eitle

(57) **Abstract**

In a nucleic acid amplification reaction apparatus (1) including a first heating section (12) configured to heat a first region (111) of a nucleic acid amplification reaction container (100) having a longitudinal direction and filled with reaction liquid (140) and liquid that has specific gravity smaller than the specific gravity of the reaction liquid (140) and does not mix with the reaction liquid (140) and a second heating section (13) configured to heat a second region (112) of the nucleic acid amplification reaction container (100) to temperature higher than the temperature of the first heating section (12), a first arrangement is an arrangement in which the first region (111) is below the second region (112) in a direction in which the gravity acts and a second arrangement is an arrangement in which the second region (112) is below the first region (111) in the direction in which the gravity acts. A third arrangement is an arrangement in which an axis in the longitudinal direction of the nucleic acid amplification reaction container is horizontal or an arrangement in which the axis inclines with respect to the vertical line and the second region (112) is below the first region (111) in the direction in which the gravity acts. A driving mechanism (20) is controlled to switch the first arrangement, the second arrangement, and the third arrangement in this order.

## Description

### BACKGROUND

### 1. Technical Field

The present invention relates to a control method for a nucleic acid amplification reaction apparatus, and to a nucleic acid amplification reaction apparatus.

### 2. Related Art

As a method of amplifying nucleic acid at high speed, there is known a method of injecting oil and nucleic acid amplification reaction liquid, which does not mix with the oil and has specific gravity different from the specific gravity of the oil, into a nucleic acid amplification reaction container, maintaining one end of the container at high temperature and maintaining the other end at low temperature, and giving a heat cycle to the nucleic acid amplification reaction liquid by rotating the container to alternately switch a state in which the one end is placed lower in the vertical direction to locate the reaction liquid in the high-temperature oil and a state in which the other end is placed lower in the vertical direction to locate the reaction liquid in the low-temperature oil (see, for example, JP-A-2012-115208 (Patent Literature 1)).

In the method described in Patent Literature 1, in a state in which one end on the high-temperature side of the container is arranged below one end on the low-temperature side, the high-temperature oil is located on the lower side of the low-temperature oil. At this point, the high-temperature oil rises and the low-temperature oil falls. Therefore, a convection current occurs in the oil in the container and the temperature of the oil at both the ends of the container fluctuates. A nucleic acid amplification reaction sometimes becomes unstable.

### SUMMARY

The object of the invention is to stably amplify nucleic acid.

An aspect of the invention is directed to a control method as set forth in claim 1 for a nucleic acid amplification reaction apparatus including: a mounting section mountable with a nucleic acid amplification reaction container having a longitudinal direction and filled with reaction liquid and liquid that has specific gravity smaller than the specific gravity of the reaction liquid and does not mix with the reaction liquid; a first heating section configured to heat a first region of the nucleic acid amplification reaction container; a second heating section configured to heat a second region of the nucleic acid amplification reaction container to temperature higher than the temperature of the first heating section; and a driving mechanism configured to switch the arrangement of the first region and the second region among first arrangement, second arrangement, and third arrangement. The first arrangement is arrangement in which the first region is below the second region in a direction in which the gravity acts. The second arrangement is arrangement in which the second region is below the first region in the direction in which the gravity acts. The third arrangement is arrangement in which an axis in the longitudinal direction of the nucleic acid amplification reaction container is horizontal or arrangement in which the axis inclines with respect to the vertical line and the second region is below the first region in the direction in which the gravity acts. The driving mechanism is controlled to switch the arrangement in order of the first arrangement, the second arrangement, and the third arrangement.

Optionally, this nucleic acid amplification reaction apparatus includes a determining section configured to determine that the reaction liquid is located in the second region. After switching the arrangement to the second arrangement and before switching the arrangement to the third arrangement, the driving mechanism may switch the arrangement to the third arrangement when the determining section determines that the reaction liquid is located in the second region and may maintain the second arrangement when the determining section determines that the reaction liquid is not located in the second region.

Another aspect of the invention is directed to a control method as set forth in claim 3 for a nucleic acid amplification reaction apparatus. In this method, the driving mechanism is configured to switch the arrangement of the first region and the second region among a first arrangement and a second arrangement. The first arrangement is an arrangement in which the second region is below the first region in a direction in which the gravity acts. The second arrangement is an arrangement in which an axis in the longitudinal direction of the nucleic acid amplification reaction container is horizontal or arrangement in which the axis inclines with respect to the vertical line and the second region is below the first region in the direction in which the gravity acts.

Optionally, this nucleic acid amplification reaction apparatus includes a determining section configured to determine that the reaction liquid is located in the second region. The driving mechanism may switch the arrangement to the second arrangement when the determining section determines that the reaction liquid is located in the second region and may maintain the first arrangement when the determining section determines that the reaction liquid is not located in the second region.

Still another aspect of the invention is directed to a control method as set forth in claim 5 for a nucleic acid amplification reaction apparatus. In this method, the driving mechanism is configured to switch the arrangement of the first region and the second region among a first arrangement and a second arrangement. The first arrangement is an arrangement in which the first region is below the second region in a direction in which the gravity acts. The second arrangement is an arrangement in which the longitudinal direction of the nucleic acid amplification reaction container inclines with respect to the vertical line and the second region is below the first region in the direction in which the gravity acts.

Optionally, this nucleic acid amplification reaction apparatus includes a determining section configured to determine that the reaction liquid is located in the second region. The driving mechanism may switch the second arrangement to the first arrangement when a set time elapses. The set time may start when the determining section determines that the reaction liquid is located in the second region.

In any one of the above methods, the nucleic acid amplification reaction apparatus may further comprise a control mechanism configured to control the driving mechanism, wherein the control mechanism controls the driving mechanism to switch the arrangement of the first region and the second region.

Still yet another embodiment is directed to a nucleic acid amplification reaction apparatus including the features set forth in claim 8.

According to the aspects of the invention, it is possible to stably amplify nucleic acid.

### BRIEF DESCRIPTION OF THE DRAWINGS

The invention will be described with reference to the accompanying drawings, wherein like numbers reference like elements.
Figs. 1A and 1B are perspective views of a nucleic acid amplification reaction apparatus in an embodiment of the invention, wherein Fig. 1A shows a state in which a lid is closed and Fig. 1B shows a state in which the lid is opened.
Fig. 2 is an exploded perspective view of a main body in the nucleic acid amplification reaction apparatus in the embodiment of the invention.
Fig. 3 is a sectional view of a nucleic acid amplification reaction container in the embodiment of the invention.
Figs. 4A to 4C are sectional views schematically showing a cross section of the main body in the nucleic acid amplification reaction apparatus according to the embodiment of the invention taken along line A-A in Fig. 1A, wherein Fig. 4A shows first arrangement, Fig. 4B shows second arrangement, and Fig. 4C shows third arrangement.
Fig. 5 is a flowchart for explaining a procedure of treatment performed using the nucleic acid amplification reaction apparatus in the embodiment of the invention.

### DESCRIPTION OF EXEMPLARY EMBODIMENTS

Preferred embodiments of the invention are explained below with reference to the drawings. Note that the embodiments explained below do not unduly limit contents of the invention described in the appended claims. Not all of components explained below are essential constituent elements of the invention.

### 1. Configuration of a nucleic acid amplification reaction apparatus

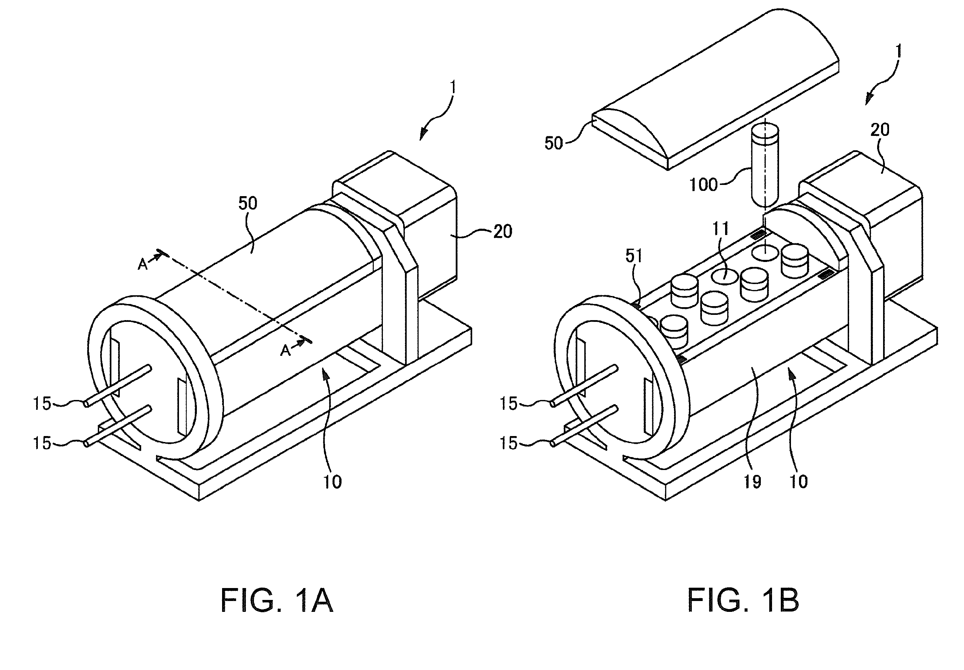

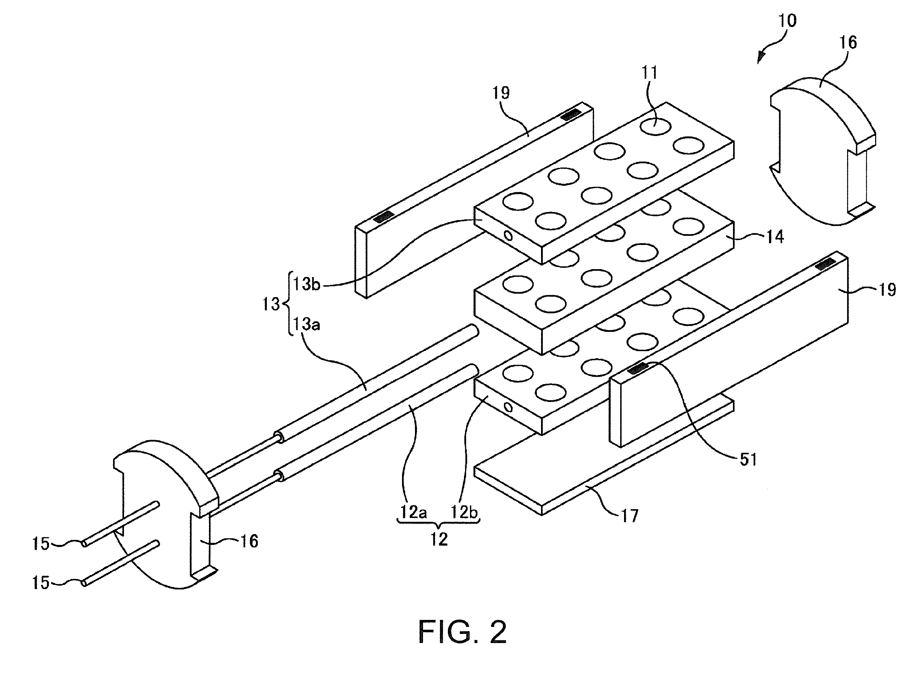

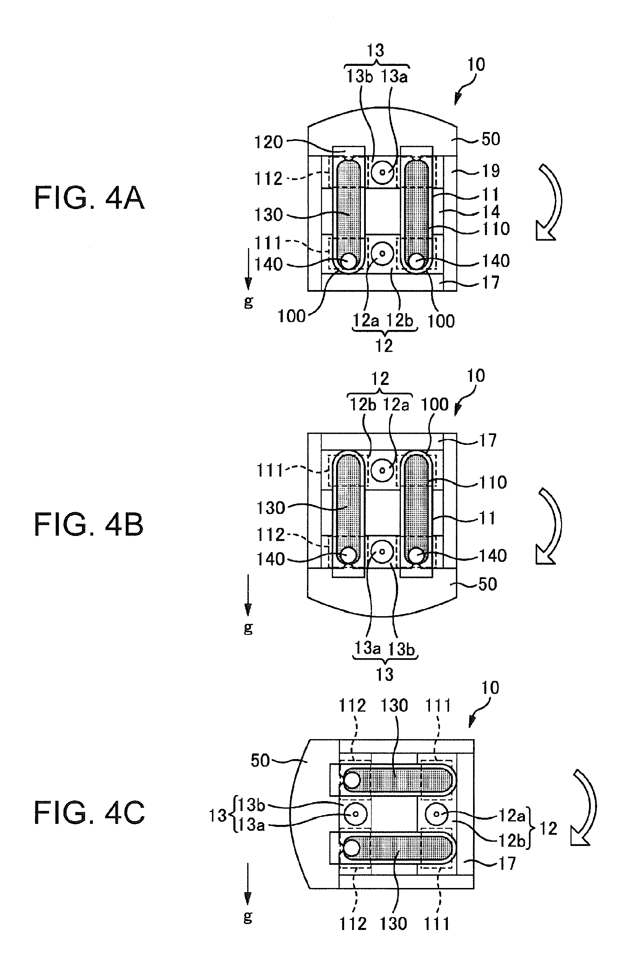

Figs. 1A and 1B are perspective views of a nucleic acid amplification reaction apparatus 1 in an embodiment of the invention. Fig. 1A shows a state in which a lid 50 of the nucleic acid amplification reaction apparatus 1 is closed. Fig. 1B shows a state in which the lid 50 of the nucleic acid amplification reaction apparatus 1 is opened and a nucleic acid amplification reaction container 100 is mounted on a mounting section 11. Fig. 2 is an exploded perspective view of a main body 10 in the nucleic acid amplification reaction apparatus 1. Fig. 4A is a sectional view schematically showing a cross section of the main body 10 in the nucleic acid amplification reaction apparatus 1 taken along line A-A in Fig. 1A.

The nucleic acid amplification reaction apparatus 1 includes, as shown in Fig. 1A, a main body 10 and a driving mechanism 20. As shown in Fig. 2, the main body 10 includes the mounting section 11, a first heating section 12 (equivalent to a heating section), and a second heating section 13. A spacer 14 is provided between the first heating section 12 and the second heating section 13. In the main body 10, the first heating section 12 is arranged on the side of a bottom plate 17 and the second heating section 13 is arranged on the side of the lid 50. In the main body 10, the first heating section 12, the second heating section 13, and the spacer 14 are fixed to flanges 16, the bottom plate 17, and fixing plates 19.

The mounting section 11 is a structure on which the nucleic acid amplification reaction container 100 is mounted. As shown in Figs. 1B and 2, the mounting section 11 is a slot structure into which the nucleic acid amplification reaction container 100 is inserted and mounted. In the mounting section 11, the nucleic acid amplification reaction container 100 is inserted into holes that pierce through a first heat block 12b of the first heating section 12 (the heating section), the spacer 14, and a second heat block 13b of the second heating section 13. A plurality of mounting sections 11 may be provided in the main body 10. In an example shown in Fig. 1B, eight mounting sections 11 are provided in the main body 10.

The nucleic acid amplification reaction apparatus 1 preferably includes a structure that retains the nucleic acid amplification reaction container 100 in a predetermined position with respect to the first heating section 12 and the second heating section 13. Consequently, a predetermined region of the nucleic acid amplification reaction container 100 can be heated by the first heating section 12 and the second heating section 13. More specifically, as shown in Figs. 4A to 4C, a first region 111 of a channel 110 configuring the nucleic acid amplification reaction container 100 can be heated by the first heating section 12 and a second region 112 of the channel 110 can be heated by the second heating section 13. A structure that decides the position of the nucleic acid amplification reaction container 100 is the bottom plate 17. As shown in Fig. 4A, it is possible to retain the nucleic acid amplification reaction container 100 in a predetermined position with respect to the first heating section 12 and the second heating section 13 by inserting the nucleic acid amplification reaction container 100 to a position where the nucleic acid amplification reaction container 100 comes into contact with the bottom plate 17.

When the nucleic acid amplification reaction container 100 is mounted on the mounting section 11, the first heating section 12 heats the first region 111 of the nucleic acid amplification reaction container 100 to a first temperature. In an example shown in Fig. 4A, in the main body 10, the first heating section 12 is arranged in a position where the first heating section 12 heats the first region 111 of the nucleic acid amplification reaction container 100.

The first heating section 12 may include a mechanism that generates heat and a member that transmits the generated heat to the nucleic acid amplification reaction container 100. In an example shown in Fig. 2, the first heating section 12 includes a first heater 12a and the first heat block 12b. The first heater 12a is a cartridge heater and is connected to a not-shown external power supply by lead wires 15. The first heater 12a is inserted into the first heat block 12b. The first heater 12a generates heat to heat the first heat block 12b. The first heat block 12b is a member that transmits the generated heat of the first heater 12a to the nucleic acid amplification reaction container 100. In the nucleic acid amplification reaction apparatus 1, the first heat block 12b is a block made of aluminum.

Since temperature control of the cartridge heater is easy, when the first heater 12a is the cartridge heater, it is possible to easily stabilize the temperature of the first heating section 12. Therefore, it is possible to realize a more accurate heat cycle. Since aluminum has high thermal conductivity, when the first heat block 12b is made of aluminum, it is possible to efficiently heat the nucleic acid amplification reaction container 100. Since heating unevenness less easily occurs in the first heat block 12b, it is possible to realize a highly accurate heat cycle. Since machining is easy, it is possible to accurately mold the first heat block 12b and improve accuracy of the heating. Therefore, it is possible to realize a more accurate heat cycle.

The first heating section 12 is preferably in contact with the nucleic acid amplification reaction container 100 when the nucleic acid amplification reaction container 100 is mounted on the mounting section 11. Consequently, when the nucleic acid amplification reaction container 100 is heated by the first heating section 12, it is possible to stably transmit heat of the first heating section 12 to the nucleic acid amplification reaction container 100. Therefore, it is possible to stabilize the temperature of the nucleic acid amplification reaction container 100. When the mounting section 11 is formed as a part of the first heating section 12, the mounting section 11 is preferably in contact with the nucleic acid amplification reaction container 100. Consequently, it is possible to stably transmit the heat of the first heating section 12 to the nucleic acid amplification reaction container 100. Therefore, it is possible to efficiently heat the nucleic acid amplification reaction container 100.

When the nucleic acid amplification reaction container 100 is mounted on the mounting section 11, the second heating section 13 heats the second region 112 of the nucleic acid amplification reaction container 100 to a second temperature different from the first temperature. In the example shown in Fig. 4A, in the main body 10, the second heating section 13 is arranged in a position where the second heating section 13 heats the second region 112 of the nucleic acid amplification reaction container 100. As shown in Fig. 2, the second heating section 13 includes a second heater 13a and the second heat block 13b. The second heating section 13 is the same as the first heating section 12 except that a region of the nucleic acid amplification reaction container 100 to be heated and temperature for heating the region are different from the region and the temperature of the first heating section 12.

The temperatures of the first heating section 12 and the second heating section 13 are controlled by a temperature sensor and a control section not shown in the figure. The temperatures of the first heating section 12 and the second heating section 13 are preferably set such that the nucleic acid amplification reaction container 100 is heated to desired temperature. By controlling the first heating section 12 to the first temperature and controlling the second heating section 13 to the second temperature, it is possible to heat the first region 111 of the nucleic acid amplification reaction container 100 to the first temperature and heat the second region 112 to the second temperature. The temperature sensor is a thermocouple.

The driving mechanism 20 is a mechanism that drives the mounting section 11, the first heating section 12, and the second heating section 13. The driving mechanism 20 includes a motor and a driving shaft not shown in the figure. The driving shaft and the flanges 16 of the main body 10 are connected. The driving shaft is provided perpendicularly to the longitudinal direction of the mounting section 11. When the motor is operated, the main body 10 is rotated with the driving shaft as an axis of rotation.

The nucleic acid amplification reaction apparatus 1 includes the not-shown control section. The control section controls at least one of the first temperature, the second temperature, a first time, a second time, and the number of cycles of a heat cycle. When the control section controls the first time or the second time, the control section controls the operation of the driving mechanism 20 to thereby control time in which the mounting section 11, the first heating section 12, and the second heating section 13 are retained in predetermined arrangement. The control section may be provided with different mechanisms for respective items to be controlled or may collectively control all the items.

The control section in the nucleic acid amplification reaction apparatus 1 performs electronic control and controls all the items. The control section includes a processor such as a CPU and storage devices such as a ROM (Read Only Memory) and a RAM (Random Access Memory) not shown in the figure. Various computer programs, data, and the like for controlling the items are stored in the storage devices. The storage devices include work areas where data being processed, a processing result, and the like of various kinds of processing are temporarily stored.

In the main body 10, as shown in the examples shown in Figs. 2 and 4A, the spacer 14 is provided between the first heating section 12 and the second heating section 13. The spacer 14 is a member that retains the first heating section 12 or the second heating section 13. By providing the spacer 14, it is possible to more accurately decide the distance between the first heating section 12 and the second heating section 13. That is, it is possible to more accurately decide the positions of the first heating section 12 and the second heating section 13 with respect to the first region 111 and the second region 112 of the nucleic acid amplification reaction container 100.

The material of the spacer 14 can be selected as appropriate according to necessity. However, the material is preferably a heat insulating material. Consequently, it is possible to reduce the mutual influence of the heat of the first heating section 12 and the second heating section 13. Therefore, it is easy to perform the temperature control of the first heating section 12 and the second heating section 13. If the spacer 14 is the heat insulating material, when the nucleic acid amplification reaction container 100 is mounted on the mounting section 11, the spacer 14 is preferably arranged to surround the nucleic acid amplification reaction container 100 in a region between the first heating section 12 and the second heating section 13. Consequently, it is possible to suppress heat radiation from the region between the first heating section 12 and the second heating section 13 of the nucleic acid amplification reaction container 100. Therefore, the temperature of the nucleic acid amplification reaction container 100 further stabilizes. The spacer 14 is the heat insulating material. In the example shown in Fig. 4A, the mounting section 11 pierces through the spacer 14. Consequently, when the nucleic acid amplification reaction container 100 is heated by the first heating section 12 and the second heating section 13, the heat of the nucleic acid amplification reaction container 100 less easily escape. Therefore, it is possible to further stabilize the temperatures of the first region 111 and the second region 112.

The main body 10 includes the fixing plates 19. The fixing plates 19 are members that retain the mounting section 11, the first heating section 12, and the second heating section 13. In the examples shown in Figs. 1B and 2, two fixing plates 19 are fit in the flanges 16. The first heating section 12, the second heating section 13, and the bottom plate 17 are fixed. The structure of the main body 10 is made firmer by the fixing plates 19. Therefore, the main body 10 is less easily broken.

The nucleic acid amplification reaction apparatus 1 includes the lid 50. In the examples shown in Figs. 1A and 4A, the mounting section 11 is covered by the lid 50. Since the mounting section 11 is covered by the lid 50, when heating is performed by the first heating section 12, it is possible to suppress heat radiation from the main body 10 to the outside. Therefore, it is possible to stabilize the temperature in the main body 10. The lid 50 may be fixed to the main body 10 by fixing sections 51. The fixing sections 51 are magnets. As shown in the examples shown in Figs. 1B and 2, magnets are provided on a surface of the main body 10 in contact with the lid 50. Although not shown in Figs. 1B and 2, in the lid 50, magnets are also provided in positions in contact with the magnets of the main body 10. When the mounting section 11 is covered with the lid 50, the lid 50 is fixed to the main body 10 by a magnetic force. Consequently, it is possible to prevent the lid 50 from coming off or moving when the main body 10 is driven by the driving mechanism 20. Therefore, it is possible to prevent the temperature in the nucleic acid amplification reaction apparatus 1 from changing when the lid 50 comes off. Therefore, it is possible to apply a more accurate heat cycle to reaction liquid 140.

The main body 10 is preferably a structure having high airtightness. If the main body 10 is the structure having high airtightness, the air inside the main body 10 less easily escapes to the outside of the main body 10. Therefore, the temperature in the main body 10 further stabilizes. As shown in Fig. 2, the space inside the main body 10 is sealed by the two flanges 16, the bottom plate 17, the two fixing plates 19, and the lid 50.

The fixing plates 19, the bottom plate 17, the lid 50, and the flanges 16 are preferably formed using a heat insulating material. Consequently, it is possible to further suppress the heat radiation from the main body 10 to the outside. Therefore, it is possible to further stabilize the temperature in the main body 10.

### 2. Heat cycle treatment performed using the nucleic acid amplification reaction apparatus

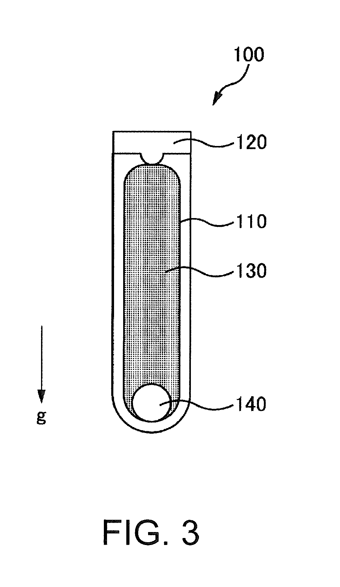

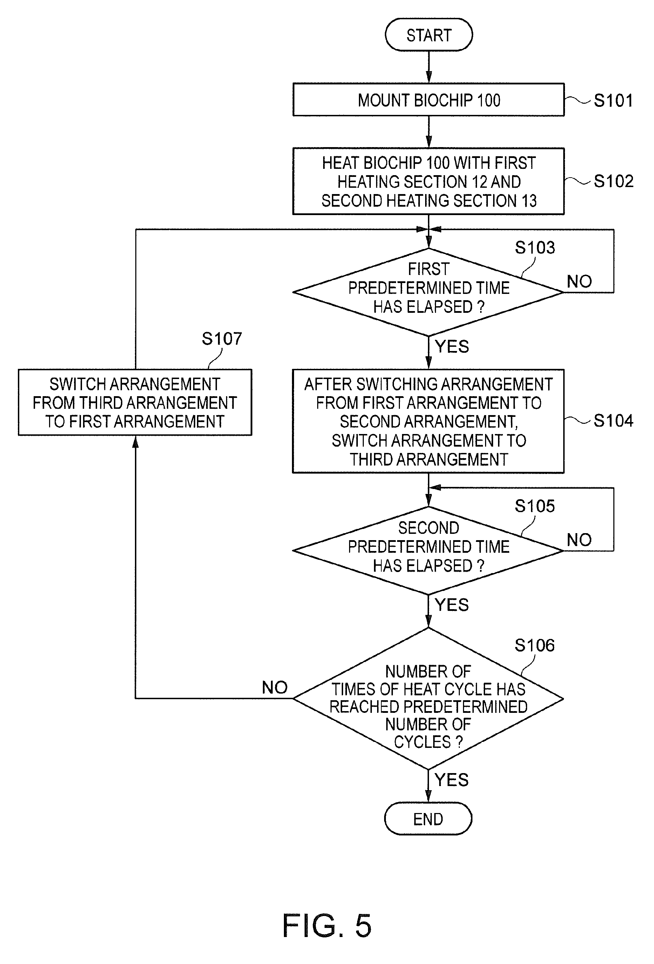

Fig. 3 is a sectional view of the nucleic acid amplification reaction container 100. Fig. 4A is a sectional view schematically showing a cross section of the nucleic acid amplification reaction apparatus 1 taken along line A-A in Fig. 1A. Figs. 4A, 4B, and 4C show a state in which the nucleic acid amplification reaction container 100 is mounted on the nucleic acid amplification reaction apparatus 1. Fig. 4A shows first arrangement, Fig. 4B shows second arrangement, and Fig. 4C shows third arrangement. Fig. 5 is a flowchart for explaining a procedure of heat cycle treatment performed using the nucleic acid amplification reaction apparatus 1. In the following explanation, first, the nucleic acid amplification reaction container 100 is explained. Then, the heat cycle treatment performed using the nucleic acid amplification reaction apparatus 1 including the nucleic acid amplification reaction container 100 is explained.

As shown in an example shown in Fig. 3, the nucleic acid amplification reaction container 100 includes the channel 110 and a sealing section 120. In the channel 110, the reaction liquid 140 and liquid 130 that has specific gravity smaller than the specific gravity of the reaction liquid 140 and does not mix with the reaction liquid 140 (hereinafter referred to as "liquid") are filled. The channel 110 is sealed by the sealing section 120.

The channel 110 is formed such that the reaction liquid 140 moves contiguously to opposed inner walls of the channel 110. The "opposed inner walls" of the channel 110 mean two regions facing each other of the wall surface of the channel 110. The "contiguously" means that the distance between the reaction liquid 140 and the wall surface of the channel 110 is short and includes contact of the reaction liquid 140 with the wall surface of the channel 110. Therefore, "the reaction liquid 140 moves contiguously to opposed inner walls" means that "the reaction liquid 140 moves in a state in which distances to both the two regions facing each other of the wall surface of the channel 110 are short", that is, the reaction liquid 140 movers along the opposed inner walls. In other words, the distance between the two inner walls of the channel 110 is a distance of a degree for allowing the reaction liquid 140 to move contiguously to the inner walls.

When the channel 110 of the nucleic acid amplification reaction container 100 has such a shape, it is possible to regulate a direction in which the reaction liquid 140 moves in the channel 110. Therefore, it is possible to regulate, to a certain degree, a route in which the reaction liquid 140 moves between the first region 111 of the channel 110 and the second region 112 different from the first region 111. Consequently, it is possible to limit a required time for the movement of the reaction liquid 140 between the first region 111 and the second region 112 to a certain degree of a range. Therefore, a degree of "contiguously" is preferably a degree for preventing fluctuation in time of the movement of the reaction liquid 140 between the first region 111 and the second region 112 from affecting a heating time of the reaction liquid 140 in both the regions, that is, a degree for preventing the fluctuation from affecting a result of reaction. More specifically, a distance in a direction perpendicular to a moving direction of the reaction liquid 140 between the opposed inner walls is desirably a degree for not allowing two or more droplets of the reaction liquid 140 to enter between the opposed inner walls.

In the example shown in Fig. 3, the external shape of the nucleic acid amplification reaction container 100 is a columnar shape having a longitudinal direction. The channel 110 is formed in a center axial direction of the nucleic acid amplification reaction container 100 (the up-down direction in Fig. 3). As the shape of the channel 110, a cross section in a direction perpendicular to the longitudinal direction of the channel 110, that is, a cross section perpendicular to the moving direction of the reaction liquid 140 in a certain region of the channel 110 (referred to as "cross section" of the channel 110) has a circular cylindrical shape. Therefore, in the nucleic acid amplification reaction container 100, the opposed inner walls of the channel 110 are regions including two points on the wall surface of the channel 110 that form the diameter of the cross section of the channel 110. The reaction liquid 140 moves in the longitudinal direction of the channel 110 along the opposed inner walls.

The first region 111 of the nucleic acid amplification reaction container 100 is a region in a part of the channel 110 heated to the first temperature by the first heating section 12. The second region 112 is a region in a part of the channel 110 heated to the second temperature by the second heating section 13 and different from the first region 111. In the nucleic acid amplification reaction container 100, the first region 111 is a region including one end portion in the longitudinal direction of the channel 110. The second region 112 is a region including the other end portion in the longitudinal direction of the channel 110. In the examples shown in Figs. 4A and 4B, a region surrounded by a dotted line including the end portion on the sealing section 120 side of the channel 110 is the second region 112. A region surrounded by a dotted line including an end portion on a far side from the sealing section 120 is the first region 111.

The liquid 130 and the reaction liquid 140 are filled in the channel 110. The liquid 130 does not mix with the reaction liquid 140, that is, does not dissolve in the reaction liquid 140. Therefore, as shown in Fig. 3, the reaction liquid 140 is retained in the liquid 130 in a state of a droplet. Since the reaction liquid 140 has specific gravity larger than the specific gravity of the liquid 130, the reaction liquid 140 is located in a bottom region in the gravity direction of the channel 110. As the liquid 130, for example, dimethyl silicone oil or paraffin oil can be used. The reaction liquid 140 is liquid containing a component necessary for reaction. When the reaction is PCR, the reaction liquid 140 includes DNA (target nucleic acid) amplified by the PCR, DNA polymerase necessary for amplifying the DNA, and a primer. For example, when the PCR is performed using oil as the liquid 130, the reaction liquid 140 is preferably an aqueous solution containing the components described above.

The heat cycle treatment performed using the nucleic acid amplification reaction apparatus 1 is explained below with reference to Figs. 4A, 4B, 4C, and 5. In Figs. 4A, 4B, and 4C, a direction of an arrow g (the downward direction in the figures) is the direction in which the gravity acts. As an example of the heat cycle treatment, shuttle PCR (two-stage temperature PCR) is explained. Note that steps explained below indicate examples of the heat cycle treatment. When necessary, the order of the steps may be interchanged, two or more steps may be performed continuously or in parallel, or steps may be added.

The shuttle PCR is a method of repeatedly applying temperature treatment in two stages of high temperature and low temperature to reaction liquid to thereby amplify nucleic acid in the reaction liquid. In the treatment at the high temperature, dissociation of double-stranded DNA is performed. In the treatment at the low temperature, annealing (a reaction in which the primer combines with single-stranded DNA) and an extension reaction (a reaction in which a complementary chain of DNA is formed starting from the primer) are performed.

In general, the high temperature in the shuttle PCR is temperature between 80°C and 100°C and the low temperature is temperature between 50°C and 70°C. In general, the treatment at the temperatures is performed for a predetermined time. Time for retaining the reaction liquid at the high temperature is shorter than time for retaining the reaction liquid at the low temperature. For example, the time for retaining the reaction liquid at the high temperature may be set to approximately one second to ten seconds and the time for retaining the reaction liquid at the low temperature may be set to approximately ten seconds to sixty seconds. Depending on condition of the reaction, the times for retaining the reaction liquid at the high temperature and the low temperature may be longer than these times.

Appropriate times, temperatures, and the number of cycles (the number of times the high temperature and the low temperature are repeated) are different depending on a type and an amount of a reagent in use. Therefore, it is preferable to perform the reaction after determining an appropriate protocol taking into account a type of a reagent and an amount of the reaction liquid 140.

First, the nucleic acid amplification reaction container 100 is mounted on the mounting section 11 (step S101). In this embodiment, after the reaction liquid 140 is introduced into the channel 110 filled with the liquid 130, the nucleic acid amplification reaction container 100 sealed by the sealing section 120 is mounted on the mounting section 11. The introduction of the reaction liquid 140 can be performed using a micro pipet, a dispensing device of an inkjet type, or the like. In a state in which the nucleic acid amplification reaction container 100 is mounted on the mounting section 11, the first heating section 12 and the second heating section 13 are in contact with the nucleic acid amplification reaction container 100 respectively in a position including the first region 111 and a position including the second region 112. In this embodiment, since the nucleic acid amplification reaction container 100 is mounted in contact with the bottom plate 17 as shown in Fig. 4A, it is possible to retain the nucleic acid amplification reaction container 100 in a predetermined position with respect to the first heating section 12 and the second heating section 13.

In this embodiment, the arrangement of the mounting section 11, the first heating section 12, and the second heating section 13 in step S101 is the first arrangement. As shown in Fig. 4A, the first arrangement is arrangement in which the first region 111 is below the second region 112 in the vertical direction. In this embodiment, the first arrangement is arrangement in which the first region 111 of the nucleic acid amplification reaction container 100 is located in the bottom of the channel 110 in the direction in which the gravity acts. Therefore, when the mounting section 11, the first heating section 12, and the second heating section 13 are in predetermined arrangement, the first region 111 is a region in a part of the channel 110 located in the bottom of the channel 110 in the direction in which the gravity acts. In the first arrangement, the first region 111 is located in the bottom of the channel 110 in the direction in which the gravity acts. Therefore, the reaction liquid 140 having the specific gravity larger than the specific gravity of the liquid 130 is located in the first region 111. In this embodiment, when the nucleic acid amplification reaction container 100 is mounted on the mounting section 11, the mounted section 11 is covered by the lid 50 and the nucleic acid amplification reaction apparatus 1 is actuated. In this embodiment, when the nucleic acid amplification reaction apparatus 1 is actuated, step S102 and step S103 are started.

In step S102, the nucleic acid amplification reaction container 100 is heated by the first heating section 12 and the second heating section 13. The first heating section 12 and the second heating section 13 heat different regions of the nucleic acid amplification reaction container 100 to different temperatures. That is, the first heating section 12 heats the first region 111 to the first temperature. The second heating section 13 heats the second region 112 to the second temperature. Consequently, a temperature gradient in which temperature gradually changes between the first temperature and the second temperature is formed between the first region 111 and the second region 112 of the channel 110. In this embodiment, the first temperature is relatively high temperature among temperatures suitable for a target reaction in the heat cycle treatment. The second temperature is relatively low temperature among the temperatures suitable for the target reaction in the heat cycle treatment. Therefore, in steps S102 in this embodiment, a temperature gradient in which temperature decreases from the first region 111 to the second region 112 is formed. The heat cycle treatment in this embodiment is the shuttle PCR. Therefore, it is preferable to set the first temperature to temperature suitable for dissociation of double-stranded DNA and set the second temperature to temperature suitable for annealing and an extension reaction.

In step S102, the arrangement of the mounting section 11, the first heating section 12, and the second heating section 13 is the first arrangement. Therefore, when the nucleic acid amplification reaction container 100 is heated in step S102, the reaction liquid 140 is heated to the first temperature. Therefore, in step S102, the reaction liquid 140 is caused to react at the first temperature.

In step S103, it is determined whether the first time has elapsed in the first arrangement. In this embodiment, the determination is performed by a not-shown determining section. The determining section may be a part of the control section. The first time is time in which the mounting section 11, the first heating section 12, and the second heating section 13 are retained in the first arrangement. In this embodiment, when step S103 is performed following the mounting in step S101, that is, when step S103 is performed for the first time, it is determined whether time after the nucleic acid amplification reaction apparatus 1 is actuated has reached the first time. In the first arrangement, the reaction liquid 140 is heated to the first temperature. Therefore, the first time is preferably set to time in which the reaction liquid 140 is caused to react at the first temperature in the target reaction. In this embodiment, the first time is preferably set to time necessary for dissociation of double-stranded DNA.

When it is determined in step S103 that the first time has elapsed (YES), the processing proceeds to step S104. When it is determined in step S103 that the first time has not elapsed (NO), step S103 is repeated.

In step S104, the main body 10 is driven by the driving mechanism 20. The arrangement of the mounting section 11, the first heating section 12, and the second heating section 13 is switched from the first arrangement to the second arrangement. Thereafter, the arrangement is switched to the third arrangement. The second arrangement is arrangement in which the second region 112 is below the first region 111 in the direction in which the gravity acts. For example, the second arrangement is arrangement in which an axis along the longitudinal direction of the nucleic acid amplification reaction container 100 is parallel to or within ±10 degrees with respect to the vertical line. The second arrangement is preferably arrangement in which the axis is parallel to the vertical line (Fig. 4B). The third arrangement is arrangement in which the axis in the longitudinal direction of the nucleic acid amplification reaction container 100 is horizontal or arrangement in which the axis inclines with respect to the vertical line and the second region 112 is below the first region 111 in the direction in which the gravity acts. The inclination is preferably within 30 degrees from the horizontal plane and more preferably within 10 degrees from the horizontal plane. In step S104 in this embodiment, the arrangement of the mounting section 11, the first heating section 12, and the second heating section 13 is switched from the state shown in Fig. 4A to the state shown in Fig. 4B and from the state shown in Fig. 4B to the state shown in Fig. 4C. In the nucleic acid amplification reaction apparatus 1, the driving mechanism 20 drives to rotate the main body 10 according to the control by the control section. When the flanges 16 are driven to rotate by the motor with the driving shaft as an axis of rotation, the mounting section 11, the first heating section 12, and the second heating section 13 fixed to the flanges 16 are rotated. The driving shaft is a shaft in the direction perpendicular to the longitudinal direction of the mounting section 11. Therefore, when the driving shaft rotates according to the operation of the motor, the mounting section 11, the first heating section 12, and the second heating section 13 are rotated. In the examples shown in Figs. 4A to 4C, the main body 10 is rotated 270°. Consequently, the arrangement of the mounting section 11, the first heating section 12, and the second heating section 13 is switched from the first arrangement to the third arrangement through the second arrangement.

When the arrangement is switched from the first arrangement to the second arrangement in step S104, a positional relation between the first region 111 and the second region 112 in the direction in which the gravity acts is opposite to the positional relation in the first arrangement. Therefore, the reaction liquid 140 moves from the first region 111 to the second region 112 according to the action of the gravity. When the arrangement of the mounting section 11, the first heating section 12, and the second heating section 13 reaches the third arrangement, step S105 is started. In step S105, it is determined whether the second time has elapsed in the third arrangement. The second time is time in which the mounting section 11, the first heating section 12, and the second heating section 13 are retained in the third arrangement. In this embodiment, the second region 112 is heated to the second temperature in step S102. Therefore, in step S105 in this embodiment, it is determined whether time after the arrangement of the mounting section 11, the first heating section 12, and the second heating section 13 reaches the third arrangement has reached the second time. In the third arrangement, since the reaction liquid 140 is retained in the second region 112, the reaction liquid 140 is heated to the second temperature in time in which the main body 10 is retained in the third arrangement. Therefore, the second time is preferably set to time in which the reaction liquid 140 is heated to the second temperature in the target reaction. In this embodiment, the second time is preferably set to time necessary for annealing and an extension reaction.

When it is determined in step S105 that the second time has elapsed (YES), the processing proceeds to step S106. When it is determined in step S105 that the second time has not elapsed (NO), step S105 is repeated.

In this embodiment, in step S105, since the nucleic acid amplification reaction container 100 is retained in the third arrangement, the axis along the longitudinal direction of the nucleic acid amplification reaction container 100 is horizontal or inclines with respect to the vertical line. Therefore, the high-temperature oil in the nucleic acid amplification reaction container 100 is prevented from rising and the low-temperature oil in the nucleic acid amplification reaction container 100 is prevented from falling and fluctuation in the temperature of the oil at both the ends of the container is suppressed. Therefore, it is possible to maintain the first region 111 and the second region 112 at the respective temperatures. It is possible to apply the heat cycle of the high temperature and the low temperature suitable for the nucleic acid amplification reaction to the reaction liquid 140 using the nucleic acid amplification reaction apparatus 1. It is possible to stably amplify the nucleic acid.

In step S106, it is determined whether the number of times of the heat cycle has reached a predetermined number of cycles. Specifically, it is determined whether the procedure of step S103 to step S105 has been completed a predetermined number of times. In this embodiment, the number of times step S103 to step S105 are completed is determined according to the number of times it is determined "YES" in step S103 and step S105. When step S103 to step S105 are performed once, the heat cycle is applied to the reaction liquid 140 by one cycle. Therefore, the number of times step S103 to step S105 are performed can be set as the number of cycles of the heat cycle. Therefore, according to step S106, it is possible to determine whether the heat cycle has been applied to the reaction liquid 140 the number of times necessary for the target reaction.

When it is determined in step S106 that the heat cycle has been performed the predetermined number of cycles (YES), the processing is completed (END). When it is determined in step S106 that the heat cycle has not been performed the predetermined number of cycles (NO), the processing shifts to step S107.

In step S107, the arrangement of the mounting section 11, the first heating section 12 , and the second heating section 13 is switched from the third arrangement to the first arrangement. By driving the main body 10 with the driving mechanism 20, it is possible to switch the arrangement of the mounting section 11, the first heating section 12, and the second heating section 13 to the first arrangement. When the arrangement of the mounting section 11, the first heating section 12, and the second heating section 13 reaches the first arrangement, step S103 is started.

When step S103 is performed following step S107, that is, when step S103 is performed for the second and subsequent times, it is determined whether time after the arrangement of the mounting section 11, the first heating section 12, and the second heating section 13 reaches the first arrangement has reached the first time.

A direction in which the mounting section 11, the first heating section 12, and the second heating section 13 are rotated by the driving mechanism 20 is preferably opposite directions in the rotation in step S104 and the rotation in step S107. Consequently, it is possible to eliminate a twist caused in wires such as the lead wires 15 by the rotation. Therefore, it is possible to suppress deterioration of the wires. The direction of the rotation is preferably reversed for each one operation by the driving mechanism 20. Consequently, it is possible to reduce a degree of the twist of the wires compared with when the rotation in the same direction is continuously performed a plurality of times.

In the embodiment, in step S104, the main body 10 is driven by the driving mechanism 20 and the arrangement of the mounting section 11, the first heating section 12, and the second heating section 13 is switched from the first arrangement to the second arrangement and thereafter switched to the third arrangement. However, in step S104, the arrangement may be switched, not through the second arrangement, from the first arrangement to the third arrangement, that is, the arrangement in which the axis along the longitudinal direction of the nucleic acid amplification reaction container 100 inclines with respect to the vertical line, the second region 112 is located in the bottom of the channel 110 in the direction in which the gravity acts, and the second region 112 is below the first region 111 in the vertical direction. Consequently, it is possible to move the fluctuation reaction liquid 140 from the first region 111 to the second region 112.

In step S104, it may be determined whether the reaction liquid 140 is located in the second region 112. In step S104, when the arrangement is switched from the first arrangement to the third arrangement through the second arrangement, for example, after the arrangement is switched to the second arrangement, the arrangement is switched to the third embodiment when it is determined that the reaction liquid 140 is located in the second region 112, and the second arrangement is maintained when it is determined that the reaction liquid 140 is not located in the second region 112. In step S104, when the arrangement is switched from the first arrangement to the third arrangement not through the second arrangement, for example, step S105 is started when it is determined that the reaction liquid 140 is located in the second region 112. The third arrangement is maintained when it is determined that the reaction liquid 140 is not located in the second region 112. The determination whether the reaction liquid 140 is located in the second region 112 of the nucleic acid amplification reaction container 100 can be performed by, for example, arranging, in the second region 112 of the nucleic acid amplification reaction container 100, a sensor that senses reaction liquid and detecting the reaction liquid. In step S104, it is possible to surely heat the reaction liquid 140 at the second temperature by determining whether the reaction liquid 140 is located in the second region 112.

The invention is not limited to the embodiment explained above and various modifications of the embodiment are possible. For example, the invention includes components substantially the same as the components explained in the embodiment (for example, components having functions, methods, and results same as the functions, the methods, and the results of the components explained in the embodiment or components having objects and effects same as the objects and the effects of the components explained in the embodiment). The invention includes components in which unessential portions of the components explained in the embodiment are replaced. The invention includes components that attain action and effects same as the action and effects of the components explained in the embodiment or components that can attain objects same as the objects of the components explained in the embodiment. The invention includes components obtained by adding publicly-known techniques to the components explained in the embodiment.

## Claims

1. A control method for a nucleic acid amplification reaction apparatus (1) comprising:
a mounting section (11) mountable with a nucleic acid amplification reaction container (100) having a longitudinal direction and filled with reaction liquid (140) and liquid that has specific gravity different from specific gravity of the reaction liquid (140) and does not mix with the reaction liquid (140) ;
a first heating section (12) configured to heat a first region (111) of the nucleic acid amplification reaction container (100) to a first temperature;
a second heating section (13) configured to heat a second region (112) of the nucleic acid amplification reaction container (100) to a second temperature which is higher than the first temperature; and
a driving mechanism (20) configured to switch an arrangement of the first region (111) and the second region (112) among a first arrangement, a second arrangement, and a third arrangement, wherein
the first arrangement is an arrangement in which the first region (111) is below the second region (112) in a direction in which gravity acts,
the second arrangement is an arrangement in which the second region (112) is below the first region (111) in the direction in which the gravity acts,
the third arrangement is an arrangement in which an axis in the longitudinal direction of the nucleic acid amplification reaction container (100) is horizontal or an arrangement in which the axis inclines with respect to a vertical line and the second region (112) is below the first region (111) in the direction in which the gravity acts, and
when the nucleic acid amplification reaction container (100) is mounted on the mounting section (11), the driving mechanism (20) is controlled to switch the arrangement of the first region (111) and the second region (112) in order of the first arrangement, the second arrangement, and the third arrangement.

2. The control method for the nucleic acid amplification reaction apparatus (1) according to claim 1, wherein
the nucleic acid amplification reaction apparatus (1) includes a determining section configured to determine that the reaction liquid (140) is located in the second region (112), and
after switching the arrangement to the second arrangement and before switching the arrangement to the third arrangement, the driving mechanism (20) switches the arrangement to the third arrangement when the determining section determines that the reaction liquid (140) is located in the second region (112) and maintains the second arrangement when the determining section determines that the reaction liquid (140) is not located in the second region (112).

3. A control method for a nucleic acid amplification reaction apparatus (1) comprising:
a mounting section (11) mountable with a nucleic acid amplification reaction container (100) having a longitudinal direction and filled with reaction liquid (140) and liquid that has specific gravity different from specific gravity of the reaction liquid (140) and does not mix with the reaction liquid (140) ;
a first heating section (12) configured to heat a first region (111) of the nucleic acid amplification reaction container (100) to a first temperature;
a second heating section (13) configured to heat a second region (112) of the nucleic acid amplification reaction container (100) to a second temperature which is higher than the first temperature; and
a driving mechanism (20) configured to switch arrangement of the first region (111) and the second region (112) among a first arrangement and a second arrangement, wherein
the first arrangement is an arrangement in which the second region (112) is below the first region (111) in a direction in which gravity acts,
the second arrangement is an arrangement in which an axis in the longitudinal direction of the nucleic acid amplification reaction container (100) is horizontal or an arrangement in which the axis inclines with respect to a vertical line and the second region (112) is below the first region (111) in the direction in which the gravity acts, and
when the nucleic acid amplification reaction container (100) is mounted on the mounting section (11), the driving mechanism (20) is controlled to switch the arrangement of the first region (111) and the second region (112) from the first arrangement to the second arrangement.

4. The control method for the nucleic acid amplification reaction apparatus according (1) to claim 3, wherein
the nucleic acid amplification reaction apparatus (1) includes a determining section configured to determine that the reaction liquid (140) is located in the second region (112), and
the driving mechanism (20) switches the arrangement to the second arrangement when the determining section determines that the reaction liquid (140) is located in the second region (112) and maintains the first arrangement when the determining section determines that the reaction liquid (140) is not located in the second region (112).

5. A control method for a nucleic acid amplification reaction apparatus (1) comprising:
a mounting section (11) mountable with a nucleic acid amplification reaction container (100) having a longitudinal direction and filled with reaction liquid (140) and liquid that has specific gravity different from specific gravity of the reaction liquid (140) and does not mix with the reaction liquid (140) ;
a first heating section (12) configured to heat a first region (111) of the nucleic acid amplification reaction container (100) to a first temperature;
a second heating section (13) configured to heat a second region (112) of the nucleic acid amplification reaction container (100) to a second temperature which is higher than the first temperature; and
a driving mechanism (20) configured to switch arrangement of the first region (111) and the second region (112) among a first arrangement and a second arrangement, wherein
the first arrangement is an arrangement in which the first region (111) is below the second region (112) in a direction in which gravity acts,
the second arrangement is an arrangement in which the longitudinal direction of the nucleic acid amplification reaction container (100) inclines with respect to a vertical line and the second region (112) is below the first region (111) in the direction in which the gravity acts, and
when the nucleic acid amplification reaction container (100) is mounted on the mounting section (11), the driving mechanism (20) is controlled to switch the arrangement of the first region (111) and the second region (112) from the first arrangement to the second arrangement.

6. The control method for the nucleic acid amplification reaction apparatus (1) according to claim 5, wherein
the nucleic acid amplification reaction apparatus (1) includes a determining section configured to determine that the reaction liquid (140) is located in the second region (112),
the driving mechanism (20) switches the second arrangement to the first arrangement when a set time elapses, and
the set time starts when the determining section determines that the reaction liquid (140) is located in the second region (112).

7. A control method for a nucleic acid amplification reaction apparatus (1) according to any one of claims 1 to 6, wherein the nucleic acid amplification reaction apparatus (1) further comprises a control mechanism configured to control the driving mechanism (20), wherein the control mechanism controls the driving mechanism (20) to switch the arrangement of the first region (111) and the second region (112).

8. A nucleic acid amplification reaction apparatus (1) comprising:
a nucleic acid amplification reaction container (100) having a longitudinal direction and filled with reaction liquid (140) and liquid that has specific gravity different from specific gravity of the reaction liquid (140) and does not mix with the reaction liquid (140);
a first heating section (12) configured to heat a first region (111) of the nucleic acid amplification reaction container (100);
a second heating section (13) configured to heat a second region (112) of the nucleic acid amplification reaction container (100) to temperature higher than temperature of the first heating section (12);
a driving mechanism (20) configured to switch an arrangement of the first region (111) and the second region (112) among a first arrangement, a second arrangement, and a third arrangement; and
a control mechanism configured to control the driving mechanism (20), wherein
the first arrangement is an arrangement in which the first region (111) is below the second region (112) in a direction in which gravity acts,
the second arrangement is an arrangement in which the second region (112) is below the first region (111) in the direction in which the gravity acts,
the third arrangement is an arrangement in which an axis in the longitudinal direction of the nucleic acid amplification reaction container (100) is horizontal or an arrangement in which the axis inclines with respect to a vertical line and the second region (112) is below the first region (111) in the direction in which the gravity acts, and
the control mechanism controls the driving mechanism (20) to switch the arrangement of the first region (111) and the second region (112) in order of the first arrangement, the second arrangement, and the third arrangement.
